**Europäisches Patentamt**

**European Patent Office**

**Office européen des brevets**

(19)

(11) Veröffentlichungsnummer: **0 348 784**

**A1**

(12) **EUROPÄISCHE PATENTANMELDUNG**

(21) Anmeldenummer: **89111113.0**

(22) Anmeldetag: **19.06.89**

(51) Int. Cl.⁴: **C01B 33/20**

(30) Priorität: **25.06.88 DE 3821516**

(43) Veröffentlichungstag der Anmeldung:
**03.01.90 Patentblatt 90/01**

(84) Benannte Vertragsstaaten:
**ES GR**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Wüst, Willi, Dr.**
**Fasanenring 32**
**D-4030 Ratingen(DE)**
Erfinder: **Just, Günther**
**Verdistrasse 48**
**D-4010 Hilden(DE)**

(54) **Verfahren zum Entsalzen quellfähiger Schichtsilikate.**

(57) Die Erfindung betrifft ein Verfahren zum Entsalzen quellfähiger Schichtsilikate. Um einen möglichst großen Entsalzungsgrad zu erreichen, wird vorgeschlagen, daß eine Membranfilterpresse mit einer wäßrigen Suspension der Schichtsilikate befüllt wird und dann die Silikate in der Presse gewaschen werden.

Fig. 1

EP 0 348 784 A1

# Verfahren zum Entsalzen quellfähiger Schichtsilikate

Die Erfindung betrifft ein Verfahren zum Entsalzen quellfähiger Schichtsilikate. In solchen Verfahren sollen die Schichtsilikate elektrolytfrei aus der Ausgangssuspension abgetrennt werden. Ein Problem bildet in diesen Verfahren die Quellfähigkeit der Schichtsilikate, durch die das Entsalzen sehr langwierig und aufwendig wird. Die Quellfähigkeit führt in der Regel auch zu einem relativ niedrigen Entsalzungsgrad.

Der Erfindung liegt die Aufgabe zugrunde, ein verfahren zum Entsalzen quellfähiger Schichtsilikate zu schaffen, mit dem die Silikate nahezu elektrolytfrei mit vertretbarem Zeitaufwand aus einer wäßrigen, Elektrolyte enthaltenden Suspension isoliert werden können.

Diese Aufgabe wird erfindungsgemäß dadurch gelöst, daß eine Membranfilterpresse mit einer wäßrigen, Schichtsilikate enthaltenden Suspension befüllt wird und dann die Silikate in der Presse gewaschen werden.

Besonders wirksam werden die Schichtsilikate entsalzt, wenn zum Waschen das Waschwasser durch den Trübekanal der Presse und zwischen den Kuchenhälften entlang geleitet wird.

Um den beim Befüllen der Presse sich aufbauenden Filterkuchen für das nachfolgende Waschen durchlässig zu halten, ist es vorteilhaft, wenn die Suspension mit höchstens 5 bar, vorzugsweise 1 bis 3 bar Förderdruck in die Presse gefüllt wird.

Beim Waschen der Schichtsilikate muß darauf geachtet werden, daß das Befüllen der Presse mit den Schichtsilikaten beendet wird, bevor die Filterkuchenhälften zusammenwachsen.

Beim Waschen wird der Waschwasserdruck allmählich bis auf 3,5 bar gesteigert. Für das abschließende Abpressen mittels Membranen wird ein Preßdruck von maximal 30 bar, vorzugsweise von 10 bis 20 bar, eingestellt.

Ein besonders gutes Ergebnis des erfindungsgemäßen Verfahrens erhält man, wenn der Gehalt an Schichtsilikat in der Ausgangssuspension auf 0,5 bis 3 %, vorzugsweise auf 1 bis 2 %, eingestellt wird.

Dieses Einstellen des Schichtsilikatgehaltes kann z. B. durch Verdünnen mit Wasser geschehen.

Besonders wirkungsvoll ist das Verfahren bei stark quellenden Schichtsilikaten, z. B. bei synthetisch hergestellten Hectoriten. Insbesondere bei Schichtsilikaten mit mittleren Teilchendurchmessern kleiner als 10 μm ist das Verfahren sehr vorteilhaft.

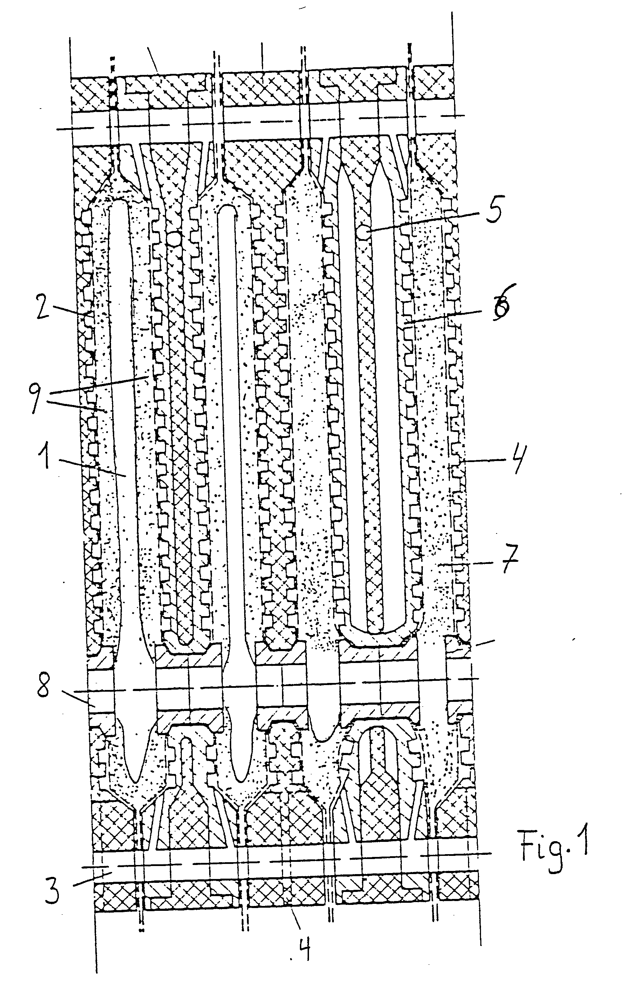

Im folgenden wird die Erfindung anhand von Ausführungsbeispielen unter Bezugnahme auf die Zeichnung näher beschrieben.

Die einzige Figur zeigt dem Querschnitt einer Membranfilterpresse, insbesondere den Filterplattensatz mit den Membranplatten. Die Suspension wird über den Trübekanal (8) in den Füllraum (1) der Presse zwischen den Filtertüchern (2) eingefüllt. Nachdem das Filtrat durch die Filtratkanäle (3) und (4) abgelaufen ist, wird auf gleiche Weise Waschwasser aufgegeben. Danach wird über den Druckluftanschluß (5) Preßluft auf die Membran (6) gegeben, die sich daraufhin ausdehnt und den Filterkuchen (7) zusammenpreßt.

## 1. Ausführungsbeispiel:

Eine sehr feinteilige Hectorit-Suspension mit einem hohen Anteil von Teilchen unter 1 μm wird nach dem erfindungsgemäßen Verfahren behandelt. Die Suspension enthält nach der Synthese 4,6 % Aktivsubstanz und 4,2 % Natriumsulfat. Erfindungsgemäß wurde eine mit dichtgewebtem Polypropylen-Tuch bespannte Membranfilterpresse mit 50 mm Kammertiefe befüllt. Die Befüllung erfolgte mit niedrigem Förderdruck, nämlich maximal 2,0 bar, um den sich im Raum (1) aufbauenden Filterkuchen für das nachfolgende Waschen durchlässig zu halten. Das Befüllen wurde beendet, bevor die an den Tüchern (2) haftenden Filterkuchenhälften (7) zusammengewachsen waren. Das Befüllen dauerte 13 min.

Anschließend wurde der Filterkuchen (7) mit Wasser einer Temperatur von 50 °C gewaschen. Das Wasser wurde durch den Trübekanal (8) und dann entlang den Filterkuchenhälften (9) geleitet. Gleichzeitig wurde ein allmählich steigender Wasserdruck bis 3,5 bar angelegt. Dieses Waschen mit allmählich steigendem Druck wurde 190 min. lang durchgeführt.

Danach wurde das Waschen beendet und der Preßdruck auf 12 bar eingestellt. Dieses Abpressen dauerte 30 min. lang. Daraufhin wurde der Filterkuchen ausgetragen.

Die Kuchenstärke lag bei 15 bis 35 mm. Der Filterkuchen hatte einen Feststoffgehalt von 12,9 %. Der Restsalzgehalt lag bei 0,35 %. Das entspricht einem Entsalzungsgrad von 94,3 %. Die spezifische Filterleistung betrug 0,36 kg/m²h.

## 2. Ausführungsbeispiel:

Die oben beschriebene Hectoritsuspension wurde hier ebenfalls verwendet. Ein Teil der Suspension wurde mit 2 Teilen Wasser verdünnt. Die Membranfilterpresse hatte eine Kammertiefe von 40 mm. Die Filtration wurde bei einer Temperatur von 55 °C durchgeführt. Das Füllen dauerte 21 min., das Waschen 155 min. und das Abpressen 13 min.

Ansonsten wurde dasselbe Verfahren wie in Beispiel 1 angewandt.

Die Kuchenstärke betrug in diesem Fall 10 bis 20 mm. Der Feststoffgehalt lag bei 15,5 %. Es wurde ein Restsalzgehalt von 0,15 %, was einem Entsalzungsgrad von 98,0 % entspricht, erreicht. Die spezifische Filterleistung betrug hier 0,28 kg/m²h.

Bezugszeichenliste:

   1 Füllraum
   2 Filtertuch
   3, 4 Filtratkanäle
   5 Druckluftanschluß
   6 Membran
   7 Filterkuchen
   8 Trübekanal
   9 Filterkuchenhälfte

**Ansprüche**

1. Verfahren zum Entsalzen quellfähiger Schichtsilikate, dadurch gekennzeichnet, daß eine Membranfilterpresse mit einer wäßrigen, Schichtsilikate enthaltenden Suspension befüllt wird und dann die Silikate in der Presse gewaschen werden.

2. Verfahren nach Anspruch 1, dadurch gekennzeichnet, daß zum Waschen das Waschwasser durch den Trübekanal (8) der Presse und zwischen den Kuchenhälften entlang geleitet wird.

3. Verfahren nach Anspruch 1 oder 2, dadurch gekennzeichnet, daß die Suspension mit höchstens 5 bar, vorzugsweise 1 bis 3 bar Förderdruck in die Presse gefüllt wird.

4. Verfahren nach einem der Ansprüche 1 bis 3, dadurch gekennzeichnet, daß das Befüllen der Presse mit den Schichtsilikaten beendet wird, bevor die Filterkuchenhälften zusammenwachsen.

5. Verfahren nach einem der Ansprüche 1 bis 4, dadurch gekennzeichnet, daß während des Waschens der Waschwasserdruck allmählich bis 3,5 bar gesteigert wird.

6. Verfahren nach einem der Ansprüche 1 bis 5, dadurch gekennzeichnet, daß der Preßdruck nach dem Waschen auf einen Wert von maximal 30 bar, vorzugsweise einen Wert zwischen 10 und 20 bar eingestellt wird.

7. Verfahren nach einem der Ansprüche 1 bis 6, dadurch gekennzeichnet, daß der Gehalt an Schichtsilikat in der Ausgangssuspension auf 0,5 bis 3 %, vorzugsweise auf 1 bis 2 % eingestellt wird.

8. Verfahren nach einem der Ansprüche 1 bis 7, dadurch gekennzeichnet, daß die Schichtsilikate synthetisch hergestellte Hectorite sind.

9. Verfahren nach Ansprüchen 1 bis 8, dadurch gekennzeichnet, daß die mittleren Teilchendurchmesser der Schichtsilikate kleiner als 10 μm sind.

Fig. 1

Europäisches
Patentamt

EUROPÄISCHER RECHERCHENBERICHT

Nummer der Anmeldung

EP 89 11 1113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS Band 87, Nr. 12, 19. September 1977, Seite 291, Zusammenfassung Nr. 89292p, Columbus, Ohio, USA; M.K. GAL'PERINA et al.: "Improvement in processes for removing watersoluble salts from slips during filter pressing" & Steklo Keram. 1977, Band 6, Seiten 18-20 | 1 | C 01 B 33/20 |
| A | KIRK-OTHMER: "ENCYCLOPEDIA OF CHEMICAL TECHNOLOGY" 3. Ausgabe, Band 10, 1980, John Wiley & Sons, New York, USA, Seiten 309-311 | 1 | |

RECHERCHIERTE SACHGEBIETE (Int. Cl.5)

C 01 B 33/20

Der vorliegende Recherchenbericht wurde für alle Patentansprüche erstellt

| Recherchenort | Abschlußdatum der Recherche | Prüfer |
|---|---|---|
| BERLIN | 14-09-1989 | CLEMENT J.P. |